# EUROPÄISCHE PATENTSCHRIFT

(11) **EP 0 943 932 B1**
(45) Veröffentlichungstag und Bekanntmachung des Hinweises auf die Patenterteilung: **21.04.2004**
(21) Anmeldenummer: 99103512.2
(22) Anmeldetag: 24.02.1999
(51) Int. Cl.: G01V 1/20, G10K 11/00

(54) **Schleppantenne mit Formstücken aus anorganischem Schaum**
Towed array with shaping pieces from anorganic foam
Antenne remorquée avec éléments en forme de mousse anorganique

(30) Priorität: 20.03.1998 DE 19812356
(43) Veröffentlichungstag der Anmeldung: 22.09.1999
(73) Patentinhaber: ATLAS ELEKTRONIK GmbH, 28305 Bremen (DE)
(72) Erfinder: Busch, Rainer, 26131 Oldenburg (DE); Junge, Wilfried, 28309 Bremen (DE)

(56) Entgegenhaltungen:
- EP-A- 0 793 217
- DE-A- 3 739 184
- DE-A- 4 208 178
- GB-A- 2 149 916
- US-A- 3 739 326
- US-A- 4 296 481
- US-A- 4 330 685
- US-A- 5 408 442

## Beschreibung

Die Erfindung betrifft eine Schleppantenne der im Oberbegriff des Anspruchs 1 genannten Art.

In der Wasserschalltechnik werden Peilanlagen mit einer von einem Wasserfahrzeug nachgeschleppten Schleppantenne großer Länge eingesetzt, um über große Entfernungen Ziele zu detektieren und zu peilen.

Aus der DE OS 42 08 178 ist eine Schleppantenne aus mehreren mechanisch und elektrisch verbundenen Sektionen bekannt, die mit Zugseilen geschleppt wird. Formstücke in Längsrichtung sorgen für einen Abstand der Zugseile und eine Querstabilität der Schleppantenne. Zum Schutz gegen Seewasser bildet ein Schlauch die äußere Hülle, der mit einem Füllmittel befüllt ist, um die Dichte der Schleppantenne der Dichte des Seewassers anzugleichen. Üblicherweise wird als Füllmittel Öl verwendet. Die Formstücke und/oder ihre Dichtungen zum Schlauch sind teildurchlässig, damit der Schlauch befüllt werden kann und langperiodische Ausgleichströmungen beim Schleppvorgang möglich sind. Sie sind aus geschlossenzelligem Material, z.B. PE-Schaum oder Polypropylen, hergestellt, dessen Dichte nahezu gleich der Dichte des Wassers ist. Zwischen den Formstücken und/oder in den Formstücken sind Hydrophone und Elektronik-Bausteine angeordnet, deren Verkabelung durch Bohrungen in den Formstücken geführt wird. Mit einem Richtungsbildner an Bord des Wasserfahrzeugs werden Empfangssignale der Hydrophone zu Richtcharakterristiksignalen zusammengefaßt, deren Richtcharakteristiken seitlich zur Schleppantenne in unterschiedliche azimutale Richtungen weisen. Die Schleppantenne ist an Bord des Wasserfahrzeugs vor ihrem Einsatz aufgetrommelt. Die Formstücke schützen die Hydrophone und Elektronik-Bausteine beim Auf- und Abwickeln der Schleppantenne. Vor dem Einsatz wird der Schlauch mit Öl gefüllt, das durch seine geringere Dichte als die Wasserdichte für einen Auftrieb der Schleppantenne sorgt.

Bei einer ebenfalls bekannten Unterwasser-Schleppantenne (DE 37 39 184 A1) weist der den akustisch sensitiven Teil bildende Schleppstrang eine schlauchförmige, elastische Hülle auf, in welche als Abstandshalter die Kontur der elastischen Hülle bestimmende Formstücke aus Polyurethan angeordnet sind, die sich einerseits an der Innenwand der Hülle abstützen und andererseits auf einem zentral verlaufenden Kabelbaum aufgeklipst sind. Der Kabelbaum umfaßt sowohl mindestens ein Zugseil als auch elektrische Signalleitungen für die in der elastischen Hülle vorhandenen Hydrophone. Jeder Formkörper hat eine Aufnahme für ein Hydrophon, zwei Aufnahmen für jeweils einen von zwei in der Hülle längsverlaufende Trimmschläuche sowie eine Aufnahme für einen als Aufklipsmittel dienenden syntaktischen Schaumkörper, dessen akustische Impedanz gleich der von Wasser ist. Sowohl die Trimmschläuche als auch der Schaumkörper sind in die Aufnahmen eingeklipst. Die Trimmschläuche sind mit einer Trimmflüssigkeit gefüllt, deren spezifisches Gewicht bzw. deren Dichte den Auftrieb des Schleppstrangs bestimmt und abhängig von der gewünschten Schlepptiefe und Schleppgeschwindigkeit ausgewählt wird. Die Trimmflüssigkeit kann während der Schleppfahrt ausgetauscht werden, so daß es möglich ist, je nach Bedarf eine leichte oder schwere Trimmflüssigkeit einzufüllen und dadurch die Schleppantenne so zu trimmen, daß sie eine gewünschte Schlepptiefe einnimmt.

Ein bekannter Hüllkörper zum Schutz einer Hydrophonanordnung (EP 0 793 217 A2 / DE 196 07 303) besteht aus einem nach einem pulvermetallurgischen Verfahren hergestellten, geschäumten Metall wobei mit Hilfe von Treibmittelzumischungen zum Metall dessen Elastizitätsmodul und Dichte so eingestellt ist, daß die akustische Impedanz des Hüllkörpers in einer Größenordnung liegt, die gleich der des umgebenden Wassers ist. Eigenschaften und Herstellungsverfahren von geschäumten Metallen sind aus dem Artikel "Möglichkeiten zur Herstellung von Bauteilen aus geschäumten Metallen" aus "Pulvermetallurgie in Wissenschaft und Praxis", Band 9, "Innovative und wirtschaftliche Bauteile durch Pulvermetallurgie", Vorträge anläßlich des Imposiums am 25/26.11.1993 in Hagen, VDI-Verlag bekannt.

Der Erfindung liegt die Aufgabe zugrunde, eine Schleppantenne der im Oberbegriff des Anspruchs 1 zu schaffen, deren Trimmung sich ohne Austausch des im Schlauch befindlichen Füllmittels in einfacher Weise beeinflussen läßt.

Die Aufgabe ist erfindungsgemäß durch die Merkmale des Anspruchs 1 gelöst.

Durch die mit einer Dichte kleiner als eins ausgebildeten, die Kontur des Schlauchs bestimmenden, voneinander beabstandeten Formstücke erhält die Schleppantenne Auftrieb, die gemäß vorteilhaften Ausführungsformen der Erfindung durch die Wahl der Dichte des anorganischen Schaums, durch die Anzahl der Formstücke und/oder durch die Dimensionierung der Formstücke eingestellt werden kann. Die Dichte des anorganischen Schaums, die Anzahl und/oder die Dimensionierung der Formstücke wird dabei unter Berücksichtigung der Dichte des Füllmittels in Abhängigkeit von der gewünschten Trimmung der Schleppantenne festgelegt.

Die gewünschte Dichte wird durch Zufügen von Treibmittelteilchen beim Gießen der Formstücke eingestellt, deren Menge auch den Elastizitätsmodul des anorganischen Schaums bestimmt. Dadurch, daß innerhalb des notwendigen Dichtebereichs der Elastizitäsmodul so eingestellt wird, daß der sich dadurch ergebende akustische Wellenwiderstand der Formstücke gleich dem des mit Füllmittel gefüllten Schlauchs ist, treten keine Impedanzsprünge zwischen den Formstücken und dem gefüllten Schlauch auf, so daß Wellenfronten von Schallwellen ungestört von den in den Formstücken aufgenommenen Hydrophonen empfangen werden.

Vorteilhafte Ausführungsformen der erfindungsgemäßen Schleppantenne mit vorteilhaften Weiterbildungen und Ausgestaltungen der Erfindung ergeben sich aus den weiteren Ansprüchen.

Gemäß einer vorteilhaften Ausführungsform der Erfindung bestehen die Formstücke aus anorganischem Schaum, der nach einem pulvermetallurgischen Verfahren hergestellt ist. Dadurch ergibt sich der Vorteil, daß Dichten des anorganischen Schaums erreichbar sind, die wesentlich kleiner sind als die Dichte des Seewassers.

Gemäß einer vorteilhaften Ausführungsform der Erfindung ist das das Schlauchinnere ausfüllende Füllmittel ein Gel. Dies hat den Vorteil, daß bei Verletzung des Schlauchs ein Auslaufen des Füllmittels verhindert ist und damit eine Verratsgefahr reduziert ist. Gel weist eine höhere Dichte als Öl auf, die bei 0,98g/cm³ liegt. Um einen größeren Bereich der Trimmung zu erlangen wird hier sowohl die Dichte als auch die Anzahl der Formstücke entsprechend variiert.

Gemäß einer vorteilhaften Ausführungsform der Erfindung werden die Formstücke geschlossenporig ausgebildet. Dies hat den Vorteil, daß bei Verwendung von Öl oder Gel als Füllmittel weder das Öl noch das im flüssigen Zustand eingefüllte Gel in die Formstücke einzudringen vermag und eine günstige Wärmeableitung von den Hydrophonen und deren Elektronikbauteilen gewährleistet ist.

Die geometrische Form der Formstücke wird abhängig vom Verwendungszweck gewählt. Vorteilhaft ist es, den Formstücken die Gestalt eines Zylinders oder einer Kugel für die Aufnahme der Hydrophone zu geben.

Gemäß einer bevorzugten Ausführungsform der Erfindung erhalten die Formstücke die Form eines Prismas oder eines Halbzylinders, wodurch sich die Schleppantenne infolge der geringeren Dichte der Formstücke gegenüber dem Füllmittel immer so ausrichten, daß die Formstücke sich in der oberen Hälfte des Schlauchs befinden. Dadurch wird eine Stabilisierung des Laufverhaltens und wegen des oberhalb des Schwerpunktes liegenden Metazentrums auch eine Stabilisierung der Lage der Schleppantenne im Wasser erreicht.

Besonders vorteilhaft ist es, in der gleichen Schleppantenne Formstücke unterschiedlicher Geometrie für die Aufnahme von Elektronik-Bausteinen oder Hydrophonen und/oder Zugseilen oder zur Stabilisierung der Lage der Schleppantenne einzusetzen.

Eine besonders einfache Montage der Formstücke bietet eine Teilung der Formstücke in Längsrichtung, insbesondere dann wenn die Formstücke Hydrophone oder Elektronik-Bausteine aufnehmen.

Einen breiten Spielraum zum Trimmen der Schleppantenne bieten die unterschiedlichen Möglichkeiten der Anordnung der Formstücke im Schleppkabel und/oder im mit Hydrophon bestückten Akustikteil und/oder in Dämpfungsmodulen, die vor oder hinter dem Akustikteil angeordnet sind.

Die Erfindung ist anhand eines in der Zeichnung dargestellten Ausführungsbeispiels für eine Schleppantenne mit Formstücken näher erläutert. Es zeigen:
- Fig. 1: ein Wasserfahrzeug mit Schleppantenne,
- Fig. 2: Formstücke unterschiedlicher
- bis 4: geometrischer Konfiguration.

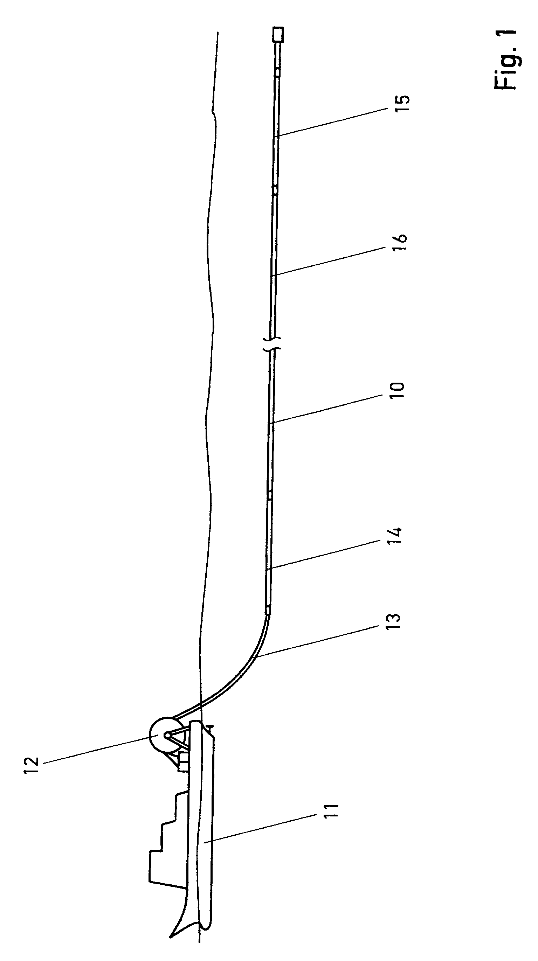

Eine Schleppantenne 10 wird von einem Wasserfahrzeug 11 nachgeschleppt, wie in Fig. 1 dargestellt. Mit einer Trommel 12, die sich an Bord befindet, wird die Schleppantenne 10 eingeholt und ausgebracht. Die Schleppantenne 10 besteht aus einem Schleppkabel 13 und zwei Dämpfungsmodulen 14,15 und einem dazwischen liegendem Akustikteil 16 mit Hydrophonen, aus deren Empfangssignalen Richtcharakteristiksignale zum Peilen von Geräuschquellen unter Wasser gebildet werden. Die Dämpfungsmodule 14,15 dienen der mechanischen Schwingungsentkopplung des Akustikteils 16.

Die Schleppantenne 10 ist vorzugsweise von zwei Zugseilen und Signalleitungen für die Empfangssignale durchzogen und mit einem Schlauch überzogen. Die Formstücke befinden sich in wählbaren Abständen in den Dämpfungsmodule 14,15 und/oder im Akustikteil 16 oder auch im Schleppkabel 13 und führen die Zugseile und Signalleitungen im Schlauch der Schleppantenne 10. Der Schlauch ist mit Öl oder einem Gel gefüllt. Die Formstücke sind aus anorganischem Schaum gefertigt und bestehen z.B. aus Aluminiumschaum, dessen Dichte geringer als eins ist.

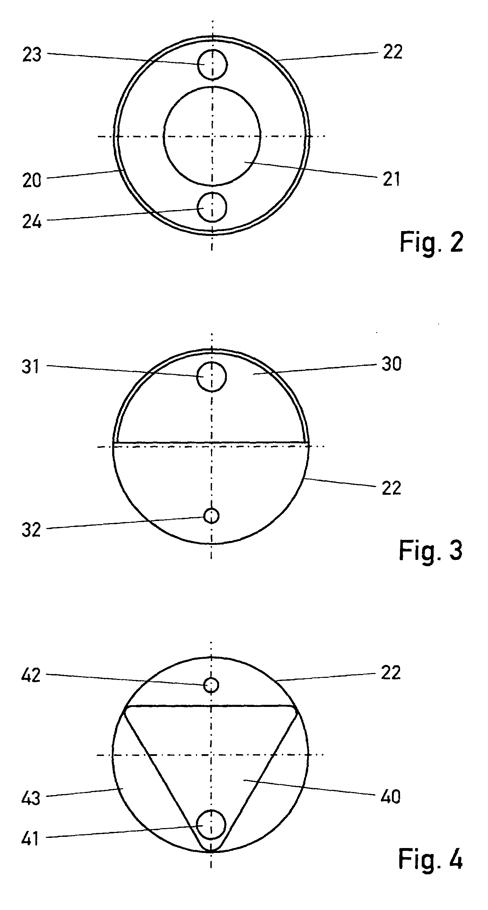

Die Figuren 2,3 und 4 zeigen unterschiedliche geometrische Formen der Formstücke. Besonders geeignet ist das in Fig. 2 dargestellte zylindrische Formstück 20 für die Aufnahme von Hydrophonen in seinem Inneren 21. Die Dichte und der Elastizitätsmodul des geschäumten Metalls für das zylindrische Formstück 21 ist durch Beimengen von Füllmittelteilchen beim Gießen so gewählt, daß seine akustische Impedanz gleich der akustischen Impedanz des gefüllten Schlauchs 22 und des umgebenden Wassers ist. Dadurch werden Impedanzsprünge beim Empfang von Schallwellen mit den Hydrophonen vermieden. In Bohrungen 23 und 24 werden die Zugseile und Signalleitungen geführt. Ein Ringspalt im Ruhezustand der Schleppantenne zwischen Schlauch 22 und zylindrischem Formstück 20 ermöglicht ein Befüllen und Entleeren des Schlauchs 22 mit einem Füllmittel.

Das Innere 21 des zylindrischen Formstücks 20 kann auch einen elektronischen Baustein aufnehmen. Die Dichte des verwendeten anorganischen Schaums wird an das Gewicht und Volumen des elektronischen Bausteins angepaßt.

Fig. 3 zeigt ein Formstück in Form eines Halbzylinders 30 aus anorganischen Schaum, dessen Dichte wesentlich kleiner als eins gewählt wird. Als Füllmittel wird ein Gel verwendet, dessen Dichte nahezu gleich eins ist. Durch die unterschiedliche Dichte des Halbzylinders 30 und des Gels wird ein Auftrieb und eine Ausrichtung der Schleppantenne erzeugt und eine stabile Lage beim Schleppen ermöglicht. Durch die verwendete Anzahl von Halbzylindern 30 und die Bestückung innerhalb der gesamten Schleppantenne ist eine Trimmung in einfacher Weise möglich. Das eine Zugkabel und die Signalleitungen werden in einer im Halbzylinder 30 befindlichen Bohrung 31 geführt, das andere Zugkabel 32 befindet sich in dem mit Gel gefüllten Halbraum des Schlauchs 22.

Fig. 4 zeigt ein prismenförmiges Formstück 40 aus anorganischen Schaum, z.B. Keramikschaum, das genauso wie der Halbzylinder 30 für Ausrichtung und Auftrieb der Schleppantenne 10 sorgt. In einer Bohrung 41 werden eines der Zugseile und die Signalleitungen geführt, das andere Zugseil 42 befindet sich in dem mit Öl oder Gel gefüllten Raum 43 des Schlauchs 22.

## Patentansprüche

1. Schleppantenne mit einem im Wasser schleppbaren, mit einem Füllmittel befüllten Schlauch (22) und mit im Schlauch (22)angeordneten, sich an der inneren Schlauchwand abzustützenden, von dem Füllmittel umgebenden Formstücken (20; 30; 40), sowie mit den Formstücken (20; 30; 40) zugeordneten Auftriebsmitteln zur Erzeugung eines Auftriebs des Schlauchs (22), **dadurch gekennzeichnet, daß** die Formstücke (20; 30; 40) selbst die Auftriebsmittel bilden und aus einem anorganischen Schaum bestehen, dessen kleiner als eins bemessene Dichte und dessen Elastizitätsmodul so eingestellt sind, daß ein sich dadurch ergebender akustischer Wellenwiderstand der Formstücke (20; 30; 40) gleich dem des mit Füllmittel gefüllten Schlauchs (22) ist.

2. Schleppantenne nach Anspruch 1, **dadurch gekennzeichnet, daß** die Dichte des anorganischen Schaums durch die Dichte des Füllmittels und der notwendigen Trimmung festgelegt ist.

3. Schleppantenne nach Anspruch 1 oder 2, **dadurch gekennzeichnet, daß** die Anzahl der Formstücke (20; 30; 40) durch die Dichte des Füllmittels und der notwendigen Trimmung festgelegt ist.

4. Schleppantenne nach einem der Ansprüche 1 - 3, **dadurch gekennzeichnet, daß** die Dimensionierung der Formstücke (20; 30; 40) durch die Dichte des Füllmittels und der notwendigen Trimmung festgelegt ist.

5. Schleppantenne nach einem der Ansprüche 1 - 4, **dadurch gekennzeichnet, daß** der anorganische Schaum ein nach einem pulvermetallurgischen Verfahren hergestellter Metallschaum ist.

6. Schleppantenne nach Anspruch 5, **dadurch gekennzeichnet, daß** das Metall Aluminium oder eine Legierung davon ist.

7. Schleppantenne nach einem der Ansprüche 1 - 4, **dadurch gekennzeichnet, daß** der anorganische Schaum ein Keramikschaum ist.

8. Schleppantenne nach einem der Ansprüche 1 - 4, **dadurch gekennzeichnet, daß** der anorganische Schaum ein Glasschaum ist.

9. Schleppantenne nach einem der Ansprüche 1 - 8, **dadurch gekennzeichnet, daß** das Füllmittel ein Gel ist.

10. Schleppantenne nach einem der Ansprüche 1 - 9, **dadurch gekennzeichnet, daß** die Formstücke (20; 30; 40) geschlossenporig ausgebildet sind.

11. Schleppantenne nach einem der Ansprüche 1 - 10, **dadurch gekennzeichnet, daß** die Formstücke (20; 30; 40) einen Innenraum zur Aufnahme von Elektronikbausteinen aufweisen.

12. Schleppantenne nach einem der Ansprüche 1 - 11, **dadurch gekennzeichnet, daß** die Formstücke (40) die Form eines Prismas aufweisen.

13. Schleppantenne nach einem der Ansprüche 1 - 11, **dadurch gekennzeichnet, daß** die Formstücke (30) die Form eines Halbzylinders aufweisen.

14. Schleppantenne nach Anspruch 12 oder 13, **dadurch gekennzeichnet, daß** der Schwerpunkt der Formstücke (40; 30) unterhalb ihres Metazentrums liegt.

15. Schleppantenne nach einem der Ansprüche 1 - 14, **dadurch gekennzeichnet, daß** der akustische Wellenwiderstand des mit Füllmittel gefüllten und die Formstücke (20; 30; 40) enthaltenden Schlauchs (22) gleich dem akustischen Wellenwiderstand des umgebenden Wassers ist.

## Claims

1. Towed antenna having a flexible tube (22) which can be towed in the water and is filled with a filling agent, and having mouldings (20; 30; 40), which are arranged in the flexible tube (22), are supported on the inner wall of the flexible tube and are surrounded by the filling agent, as well as having lifting means, which are associated with the mouldings (20; 30; 40) in order to produce lift on the flexible tube (22), **characterized in that** the mouldings (20; 30; 40) themselves form the lifting means and are composed of an inorganic foam, whose density, which is designed to be less than unity, and whose modulus of elasticity are set such that the acoustic characteristic impedance of the mouldings (20; 30; 40) which results from this is equal to that of the flexible tube (22) which is filled with the filling agent.

2. Towed antenna according to Claim 1, **characterized in that** the density of the inorganic foam is governed by the density of the filling agent and by the necessary trimming.

3. Towed antenna according to Claim 1 or 2, **characterized in that** the number of mouldings (20; 30; 40) is governed by the density of the filling agent and of the necessary trimming.

4. Towed antenna according to one of Claims 1 - 3, **characterized in that** the dimensions of the mouldings (20; 30; 40) are governed by the density of the filling agent and of the necessary trimming.

5. Towed antenna according to one of Claims 1 - 4, **characterized in that** the inorganic foam is a metal foam which is produced by means of a powder-metallurgical method.

6. Towed antenna according to Claim 5, **characterized in that** the metal is aluminium or an aluminium alloy.

7. Towed antenna according to one of Claims 1 - 4, **characterized in that** the inorganic foam is a ceramic foam.

8. Towed antenna according to one of Claims 1 - 4, **characterized in that** the inorganic foam is a glass foam.

9. Towed antenna according to one of Claims 1 - 8, **characterized in that** the filling agent is a gel.

10. Towed antenna according to one of Claims 1 - 9, **characterized in that** the mouldings (20; 30; 40) are designed to have closed pores.

11. Towed antenna according to one of Claims 1 - 10, **characterized in that** the mouldings (20; 30; 40) have an internal area for accommodation of electronics modules.

12. Towed antenna according to one of Claims 1 - 11, **characterized in that** the mouldings (40) are in the form of a prism.

13. Towed antenna according to one of Claims 1 - 11, **characterized in that** the mouldings (30) are in the form of a half-cylinder.

14. Towed antenna according to Claim 12 or 13, **characterized in that** the centre of gravity of the mouldings (40; 30) is below their metacentre.

15. Towed antenna according to one of Claims 1 - 14, **characterized in that** the acoustic characteristic impedance of the flexible tube (22) which is filled with the filling agent and contains the mouldings (20; 30; 40) is equal to the acoustic characteristic impedance of the surrounding water.

## Revendications

1. Antenne remorquée dotée d'un tuyau flexible (22) remorquable dans l'eau et rempli d'un fluide de remplissage et de pièces façonnées (20; 30; 40) disposées dans le tuyau flexible (22) qui s'appuient sur la paroi intérieure du tuyau flexible et qui sont entourées par le fluide de remplissage, ainsi que de moyens de sustentation associés aux pièces façonnées (20; 30; 40) pour créer la sustentation du tuyau flexible (22), **caractérisée en ce que** les pièces façonnées (20; 30; 40) forment elles-mêmes les moyens de sustentation et sont constituées de mousse minérale dont la densité inférieure à un et le module d'élasticité sont réglés de telle sorte que la résistance aux ondes acoustiques qui en résulte pour des pièces façonnées (20; 30; 40) soit identique à celle du tuyau flexible (22) rempli du fluide de remplissage.

2. Antenne remorquée selon la revendication 1, **caractérisée en ce que** la densité de la mousse minérale est déterminée par la densité du fluide de remplissage et par l'ajustement de la sustentation nécessaire.

3. Antenne remorquée selon la revendication 1 ou 2, **caractérisée en ce que** le nombre de pièces façonnées (20; 30; 40) est déterminé par la densité du fluide de remplissage et par l'ajustement de la sustentation nécessaire.

4. Antenne remorquée selon l'une des revendications 1 à 3, **caractérisée en ce que** le dimensionnement des pièces façonnées (20; 30; 40) est déterminé par la densité du fluide de remplissage et par l'ajustement de la sustentation nécessaire.

5. Antenne remorquée selon l'une des revendications 1 à 4, **caractérisée en ce que** la mousse minérale est une mousse métallique préparée par un procédé de la métallurgie des poudres.

6. Antenne remorquée selon la revendication 5, **caractérisée en ce que** le métal est l'aluminium ou un alliage de ce dernier.

7. Antenne remorquée selon l'une des revendications 1 à 4, **caractérisée en ce que** la mousse minérale est une mousse céramique.

8. Antenne remorquée selon l'une des revendications 1 à 4, **caractérisée en ce que** la mousse minérale est une mousse de verre.

9. Antenne remorquée selon l'une des revendications 1 à 8, **caractérisée en ce que** le fluide de remplissage est un gel.

10. Antenne remorquée selon l'une des revendications 1 à 9, **caractérisée en ce que** les pièces façonnées (20; 30; 40) sont réalisées avec une porosité fermée.

11. Antenne remorquée selon l'une des revendications 1 à 10, **caractérisée en ce que** les pièces façonnées (20; 30; 40) présentent un espace intérieur de réception de modules électroniques.

12. Antenne remorquée selon l'une des revendications 1 à 11, **caractérisée en ce que** les pièces façonnées (40) ont la forme d'un prisme.

13. Antenne remorquée selon l'une des revendications 1 à 11, **caractérisée en ce que** les pièces façonnées (30) ont la forme d'un demi-cylindre.

14. Antenne remorquée selon la revendication 12 ou 13, **caractérisée en ce que** le centre de gravité des pièces façonnées (40; 30) est situé en dessous de leur métacentre.

15. Antenne remorquée selon l'une des revendications 1 à 14, **caractérisée en ce que** la résistance aux ondes acoustiques du tuyau flexible (22) rempli de fluide de remplissage et contenant les pièces façonnées (20; 30; 40) est égale à la résistance aux ondes acoustiques de l'eau environnante.
